# EUROPÄISCHE PATENTSCHRIFT

(11) **EP 1 586 195 B1**
(45) Veröffentlichungstag und Bekanntmachung des Hinweises auf die Patenterteilung: **17.05.2006**
(21) Anmeldenummer: 03708068.6
(22) Anmeldetag: 21.01.2003
(51) Int. Cl.: H04N 5/225, G02B 23/12, G02B 26/08

(54) **VORRICHTUNG ZUM ERFASSEN EINER OBJEKTSZENE**
DEVICE FOR DETECTING AN OBJECT SCENE
DISPOSITIF DE DETECTION D'UNE SCENE OBJET

(43) Veröffentlichungstag der Anmeldung: 19.10.2005
(73) Patentinhaber: Diehl BGT Defence GmbH & Co.KG, 88662 Überlingen (DE)
(72) Erfinder: BAUMANN, Rainer, 88662 Überlingen (DE); ECKHARDT, Reiner, 88662 Überlingen (DE)
(74) Vertreter: Diehl Patentabteilung
(86) Internationale Anmeldenummer: PCT/EP2003/000565
(87) Internationale Veröffentlichungsnummer: WO 2004/066614

(56) Entgegenhaltungen:
- DE-A- 3 317 232
- US-A- 4 499 490

## Beschreibung

Die Erfindung betrifft eine Vorrichtung zur Erfassung einer Objektszene, enthaltend ein abbildendes optisches System, das relativ zu einer Struktur verschwenkbar ist und einem strukturfesten Detektor, auf welchem durch das abbildende optische System ein Bild der Objektszene erzeugt wird.

Es kann sich bei dieser Vorrichtung um einen Suchkopf für einen zielverfolgenden Flugkörper handeln. Die Erfindung ist aber auch anwendbar bei einem "Rundumsuchgerät", also einer stationären Vorrichtung, durch welche ein großes Gesichtsfeld ständig abgetastet wird. Ein solches Rundumsuchgerät ist beispielsweise in der EP 0 629 890 B1 dargestellt und beschrieben.

Bei bekannten Suchköpfen für zielverfolgende Flugkörper mit einem strukturfesten Detektor ist ein abbildendes optisches System um zwei Achsen kardanisch gelagert, die sich im wesentlichen senkrecht zu der Längsachse oder Rollachse des Flugkörpers erstrecken, nämlich um eine Nickachse und eine Gierachse. Damit kann das optische System um den strukturfesten Detektor mit zwei Freiheitsgraden verschwenkt und auf ein Ziel ausgerichtet werden. Ein Beispiel eines solchen Suchkopfes ist in der DE 34 38 544 C2 beschrieben. Dabei ist der Schielwinkel des Suchkopfes, also die Neigung der optischen Achse des optischen Systems relativ zu der Längsachse des Flugkörpers durch die Mechanik der kardanischen Lagerung beschränkt.

Es sind Suchköpfe bekannt, bei denen ein abbildendes optisches System in einem Nickrahmen sitzt, der um eine Nickachse relativ zu einem Rollrahmen verschwenkbar ist. Der Rollrahmen wiederum ist um eine mit der Längsachse des Flugkörpers zusammenfallende Rollachse drehbar in der Struktur des Flugkörpers gelagert (siehe DE 33 17 232 A1 und DE 198 24 899 C1). Bei diesen bekannten Suchköpfen ist der Detektor nicht strukturfest, sondern an dem Nickrahmen vorgesehen. Das macht es schwierig, die Signale des Detektors herauszuführen.

Der Erfindung liegt die Aufgabe zugrunde, eine Vorrichtung der eingangs genannten Art zum Erfassen einer Objektszene so auszubilden, dass bei strukturfestem Detektor ein großer Raumwinkel erfasst werden kann.

Erfindungsgemäß wird diese Aufgabe dadurch gelöst, dass
(a) das abbildende optische System einen objektseitigen Systemteil aufweist, der mit einem Nickrahmen um eine zu einer Rollachse senkrechte Nickachse schwenkbar ist,
(b) der Nickrahmen um die Nickachse schwenkbar in einem Rollrahmen gelagert ist, der um die Rollachse in der Struktur drehbar gelagert ist,
(c) der objektseitige Systemteil erste Strahlenumlenkmittel enthält, durch welche der Abbildungsstrahlengang des abbildenden optischen Systems in Richtung entlang der Nickachse umlenkbar ist,
(d) das abbildende optische System weiterhin zweite Strahlenumlenkmittel enthält, die mit dem Rollrahmen verdrehbar sind und durch welche der umgelenkte Strahlengang längs der Nickachse aufgenommen und in die Richtung der Rollachse umgelenkt wird, und
(e) der strukturfeste Detektor auf der Rollachse angeordnet ist.

Durch die Verwendung eines aus Nickrahmen und Rollrahmen bestehenden Kardansystems ist es möglich, einen großen Raumwinkel zu erfassen. Der objektseitige Systemteil kann bei geeigneter konstruktiver Auslegung um die Nickachse um mehr als 90° gegenüber dem Rollrahmen verschwenkt werden, ohne dass diese Bewegung durch den Rollrahmen behindert wird. Die Drehung des Rollrahmens um die Rollachse gestattet eine Orientierung des Systemteils innerhalb eines Winkels von 360°. Im Gegensatz zu bekannten Roll-Nick-Systemen sitzt aber der Detektor nicht am Nickrahmen, sondern ist strukturfest auf der Rollachse angeordnet. Das wird ermöglicht durch eine Umlenkung des Abbildungsstrahlenganges. Der Abbildungsstrahlengang wird zunächst durch die ersten Strahlenumlenkmittel so umgelenkt, dass er längs der Nickachse verläuft. Der Strahlengang wird dann durch eine Verschwenkung des objektseitigen Systemsteils um die Nickachse bis auf eine Bilddrehung nicht beeinflusst. Die zweiten Strahlenumlenkmittel, die mit dem Rollrahmen verdrehbar sind, erfassen den so umgelenkten Strahlengang auf der Nickachse und lenken ihn so um, dass er längs der Rollachse verläuft. Auf der Rollachse, die ja strukturfest ist, sitzt der strukturfeste Detektor.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig. 1: zeigt schematisch und abgebrochen einen Längsschnitt eines Flugkörpers mit einem Suchkopf.
- Fig. 2: zeigt eine Abwandlung einer Einzelheit des abbildenden optischen Systems.
- Fig. 3: zeigt eine weitere Abwandlung einer Einzelheit des abbildenden optischen Systems.
- Fig. 4: zeigt eine andere Ausführung des Suchkopfes.

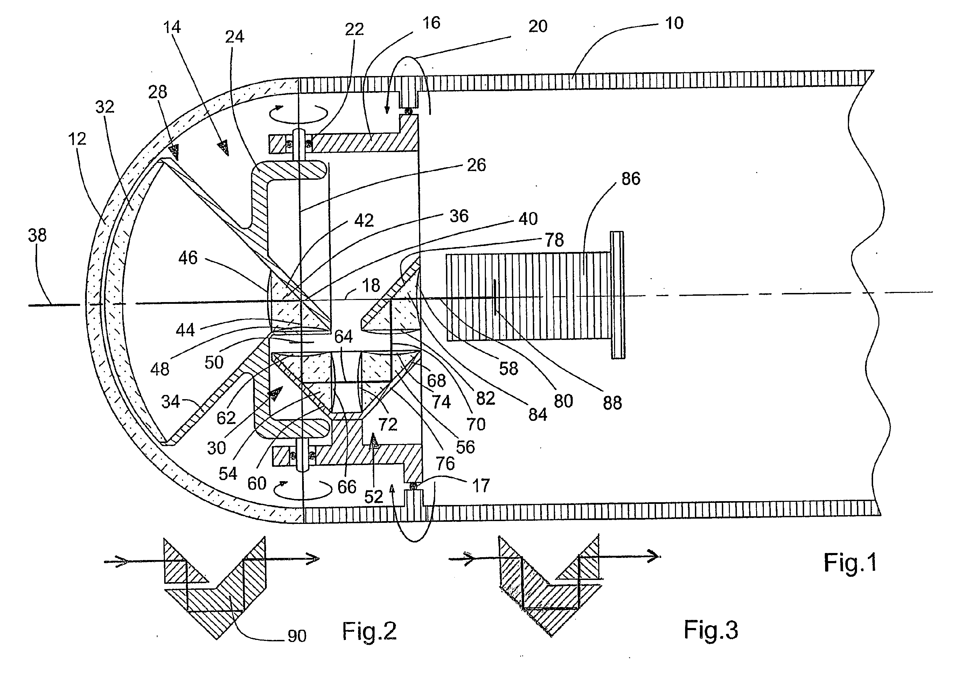

In Fig. 1 ist mit 10 die Struktur eines zielverfolgenden Flugkörpers bezeichnet. Die Nase des Flugkörpers wird von einem halbkugeligen Dom oder Fenster 12 gebildet. Hinter dem Dom 12 sitzt ein Suchkopf 14.

Der Suchkopf 14 weist einen Rollrahmen 16 auf. Der Rollrahmen 16 ist in Lagermitteln 17 um eine Rollachse 18 drehbar gelagert. Das ist in Fig. 1 durch die Pfeile 20 angedeutet. Die Rollachse 18 fällt hier mit der Längsachse des Flugkörpers zusammen. In dem Rollrahmen 16 ist über Lagermittel 22 ein Nickrahmen 24 um eine Nickachse 26 schwenkbar gelagert. Der Rollrahmen 16 gestattet eine Schwenkbewegung des Nickrahmens und der darin sitzenden Teil um die Nickachse 26 um einen Winkel von etwa 180°, als um 90° nach hinten in Fig. 1 und um 90° nach vom.

In dem Nickrahmen 24 sitzt ein objektseitiger Systemteil 28 eines abbildenden optischen Systems, das generell mit 30 bezeichnet ist. Der objektseitige Systemteil 28 enthält eine Linse 32, die in einer trichterförmigen, an den Nickrahmen angeformten Fassung 34 gehaltert ist, und erste Strahlenumlenkmittel in Form eines Umlenkprismas 36. Der objektseitige Systemteil 28 des abbildenden optischen Systems 30 definiert eine optische Achse 38. Die optische Achse 38 verläuft senkrecht zu der Nickachse 26. In der dargestellten Mittelstellung des Nickrahmens 24 fällt die optische Achse 38 mit der Längsachse des Flugkörpers und der Rollachse 18 zusammen. Rollachse 18, Nickachse 26 und optische Achse 38 schneiden sich im Krümmungsmittelpunkt 40 des halbkugeligen Doms 12. Der Querschnitt des mit dem Nickrahmen 24 verbundenen Umlenkprismas 36 bildet im wesentlichen ein gleichschenklig-rechteckiges Dreieck. Das Umlenkprisma 36 weist dementsprechend eine "Hypothenusenfläche" 42 auf. Diese Hypothenusenfläche 42 bildet mit der optischen Achse 38 einen Winkel von 45°. Der Abbildungsstrahlengang des abbildenden optischen Systems 30 wird daher durch Totalreflexion an der Hypothenusenflächen 42 um 90° umgelenkt, so dass die optische Achse 44 des umgelenkten Strahlenganges nunmehr mit der Nickachse 26 zusammenfällt. Der Strahlengang tritt dabei senkrecht durch die beiden "Kathetenflächen" 46 und 48 des Umlenkprisma 36. Bei der in Fig. 1 dargestellten Ausführung ist die Kathetenfläche 46 konvex und die Kathetenfläche 48 konkav gekrümmt. Das Umlenkprisma 36 hat dadurch gleichzeitig eine Linsenwirkung. Das Umlenkprisma 36 erzeugt in Verbindung mit der Linse 32 ein Zwischenbild 50 der Objektszene.

Die Ausnutzung des Umlenkprismas 36 als Linse vermindert die Zahl der reflektierenden Flächen und damit Lichtverluste und Streulicht. Ferner kann durch geschickte Wahl der Prismen-Materialien und -Brechkräfte das optische System passiv ternperaturkompensiert werden.

Der umgelenkte Abbildungsstrahlengang wird von zweiten Strahlenumlenkmitteln aufgenommen, die generell mit 52 bezeichnet sind. Die zweiten Strahlenumlenkmittel 52 sind fest in dem Rollrahmen 16 gehaltert und mit diesem um die Rollachse 18 drehbar. Die zweiten Strahlenumlenkmittel 52 weisen ein zweites Umlenkprisma 54, ein drittes Umlenkprisma 56 und ein viertes Umlenkprisma 58 auf. Die Querschnitte der Umlenkprismen 54, 56 und 58 sind ähnlich wie bei dem Umlenkprisma 36 gleichschenklig-rechtwinklige Dreiecke mit Hypothenusenflächen, an denen der Abbildungsstrahlengang totalreflektiert wird und mit Kathetenflächen, die senkrecht zur optischen Achse des Abbildungsstrahlenganges verlaufen.

Das zweite Umlenkprisma 54 sitzt auf der Nickachse 26. Seine Hypothenusenfläche 60 ist unter 45° zur Nickachse 26 und zu der einmal umgelenkten optischen Achse 44 geneigt. Eine Kathetenfläche 62 ist senkrecht zu der optischen Achse 44 und liegt der Kathetenfläche 48 des Umlenkprismas 36 gegenüber. Das Zwischenbild 50 liegt beispielsweise zwischen den Kathetenflächen 48 und 62. Durch das Umlenkprisma 54 wird der Abbildungsstrahlengang ein zweites Mal um 90° umgelenkt, so dass die zweimal umgelenkte optische Achse 64 parallel zu der Rollachse 18 in der von Nickachse 26 und Rollachse 18 aufgespannten Ebene verläuft. Die zweimal umgelenkte optische Achse 64 tritt durch die Kathetenfläche 66 des zweiten Umlenkprismas 54 aus.

Das dritte Umlenkprisma 56 sitzt auf der zweimal umgelenkten optischen Achse 64. Seine Hypothenusenfläche 68 ist wieder unter 45° zu der optischen Achse 64 geneigt und senkrecht zu der Hypothenusenfläche 60 des zweiten Umlenkprismas 54 und lenkt durch Totalreflexion den Abbildungsstrahlengang wieder um 90° parallel zur Nickachse 26 nach innen zu der Rollachse 18 hin um. Auch die dreimal umgelenkte optische Achse 70 verläuft in der von Nickachse 26 und Rollachse 18 aufgespannten Ebene. Die eintrittseitige Kathetenfläche 72 des dritten Umlenkprismas 56 liegt senkrecht zu der zweimal umgelenkten optischen Achse 64 und der austrittseitigen Kathetenfläche 66 des zweiten Umlenkprismas 54 gegenüber. Die austrittseitige Kathetenfläche 74 des dritten Umlenkprismas ist senkrecht zu der dreimal umgelenkten optischen Achse 70.

Das zweite und das dritte Umlenkprisma 54 und 56 sitzen mit ihren Hypothenusenflächen in einer dachförmigen Halterung 76 in dem Rollrahmen 16.

Die Hypothenusenfläche 78 des vierten Umlenkprismas 58 ist parallel zu der Hypothenusenfläche 68 des dritten Umlenkprismas 56 und um 45° zu der dreimal umgelenkten optischen Achse 70 geneigt. Das vierte Umlenkprisma 58 ist in dem Rollrahmen 16 auf der Rollachse 18 angeordnet. Durch Totallreflexion an der Hypothenusenfläche 78 wird der Abbildungsstrahlengang ein viertes Mal um 90° umgelenkt, so dass die viermal umgelenkte optische Achse 80 des Abbildungsstrahlenganges mit der Rollachse 18 zusammenfällt. Die eintrittseitige Kathetenfläche 82 des vierten Umlenkprismas 58 ist senkrecht zu der dreimal umgelenkten optischen Achse 70 und liegt der austrittseitigen Kathetenfläche 74 des dritten Umlenkprismas gegenüber. Die austrittseitige Kathetenfläche 84 des vierten Umlenkprismas 58 ist einem strukturfesten Detektor 86 zugewandt.

Die Kathetenflächen 62, 66, 72, 74, 82 und 84 sind gekrümmt, so dass die zugehörigen Umlenkprismen zugleich als Linsen wirken. Diese Linsen bilden einen detektorseitigen Systemteil des abbildenden optischen Systems 30, durch welchen auf dem Raster von Detektorelementen des Detektors 86 ein Bild 88 der Objektszene erzeugt wird.

Die beschriebene Anordnung arbeitet wie folgt:

Der Nickrahmen 24 gestattet eine Verschwenkung der optischen Achse 38 um die Nickachse 26 über einen Winkel von etwa 90° nach vom und nach hinten in Fig. 1. Der Rollrahmen 16 gestattet eine Drehbewegung der Nickachse 26 um die Rollachse 18 über einen Winkel von 360°. Die optische Achse 36 kann dadurch in jede Richtung innerhalb des halbkugeligen Raumwinkels, der durch den Dom 12 abgedeckt ist, ausgerichtet werden. Durch die Umlenkung des Strahlenganges durch das erste Umlenkprisma 36 ist der Abbildungsstrahlengang durch die Schwenkbewegung um die Nickachse 26 bis auf eine Bilddrehung nicht beeinflusst. Der Abbildungsstrahlengang fällt bei jeder Stellung des Nickrahmes auf das zweite Umlenkprisma 54. Durch die Umlenkprismen 54, 56 und 58 wird der Abbildungsstrahlengang auf den feststehenden Detektor 86 gelenkt, und zwar bei jeder Stellung des Rollrahmens 16. Die strukturfeste Anordnung des Detektors erleichtert die Signalübertragung und die Zufuhr von Kühlmittel zum Detektor.

Die Zwischenabbildung und die Ausbildung der Umlenkprismen 54, 56 und 58 als Linsen gestattet es, den Bündelquerschnitt des Abbildungsstrahlenganges bei Durchgang durch die Umlenkprismen 54, 56 und 58 klein zu halten.

Statt der Umlenkprismen 36, 54, 56 und 58 können auch Umlenkspiegel vorgesehen werden. Es ist auch möglich, die Umlenkprismen 54, 56 und 58 zu einem einzigen Körper 90 zu vereinigen, wie in Fig. 2 dargestellt ist.

Im Unterschied zu der in Fig. 1 dargestellten Ausführung ist es auch möglich, die Nickachse in Richtung auf den Detektor hin zu verlagern und im Vergleich zu Fig. 1 entlang des Strahlpfads 70 anzuordnen. Bei dieser Ausgestaltung sind dann die in Fig. 1 dargestellten reflektierenden Mittel 54 und 56 auf dem Nickrahmen und mit diesem schwenkbar angeordnet. Dabei bilden dann gewissermaßen die ersten drei reflektierenden Mittel, dargestellt als Umlenkprismen 36, 54 und 56 die ersten Strahlenumlenkmittel des objektseitigen Systemteils. Das Zwischenbild wird dabei zwischen dem dritten und vierten reflektierenden Mittel, in Fig. 1 etwa auf Höhe des Bezugszeichens 70 erzeugt. Dabei können, wie in Fig. 3 dargestellt, die Umlenkprismen 36, 54 und 56 zu einem einzigen Körper vereinigt werden.

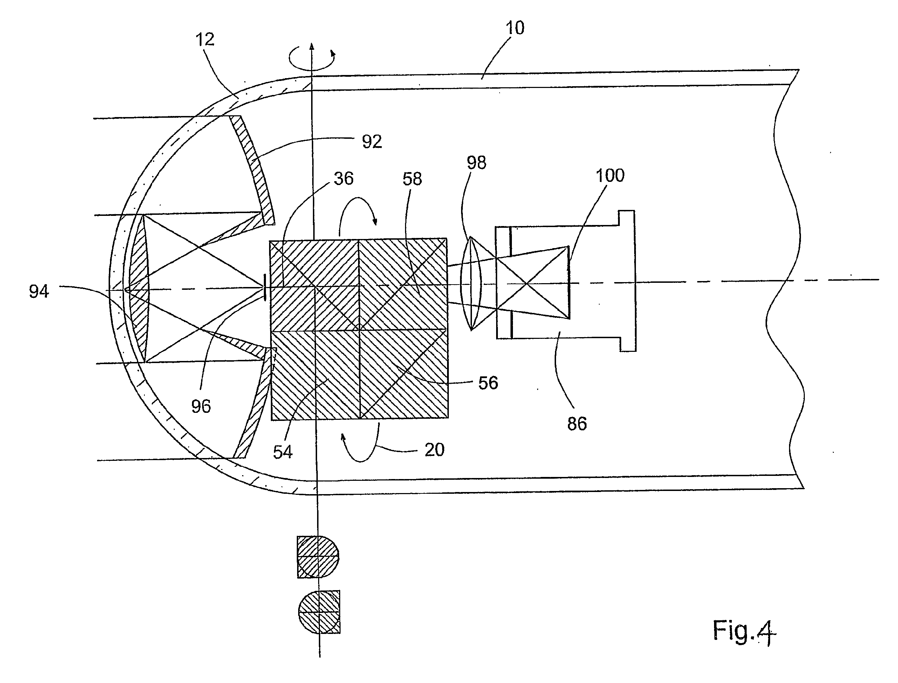

Die Ausführung nach Fig. 4 entspricht im Prinzip der Ausführung nach Fig. 1. Entsprechende Teile sind in Fig. 4 mit dem gleichen Bezugszeichen versehen wie in Fig. 1.

Im Gegensatz zu der Ausführung von Fig. 1 ist der objektseitige Systemteil des abbildenden optischen Systems ein Cassegrain-System mit einem ringförmigen Hohlspiegel 92 und einem konvexen Sekundärspiegel 94. Ein Zwischenbild 96 wird beispielsweise dicht vor dem ersten Umlenkprisma 36 erzeugt. Die Umlenkprismen 36, 54, 56 und 58 sind jeweils Teile von Würfeln mit einer reflektierenden Diagonalfläche. Eine gesonderte Linse 98 erzeugt das Bild 100 der Objektszene auf dem Detektor.

## Patentansprüche

1. Vorrichtung zur Erfassung einer Objektszene, enthaltend ein abbildendes optisches System (30), das relativ zu einer Struktur (10) verschwenkbar ist und einen strukturfesten Detektor (86), auf welchem durch das abbildende optische System (30) ein Bild der Objektszene erzeugt wird,
**dadurch gekennzeichnet, dass**
(a) das abbildende optische System (30) einen objektseitigen Systemteil (28) aufweist, der mit einem Nickrahmen (24) um eine zu einer Rollachse (18) senkrechte Nickachse (26) schwenkbar ist,
(b) der Nickrahmen (24) um die Nickachse (26) schwenkbar in einem Rollrahmen (16) gelagert ist, der um die Rollachse (18) in der Struktur (10) drehbar gelagert ist,
(c) der objektseitige Systemteil (28) erste Strahlenumlenkmittel enthält, durch welche der Abbildungsstrahlengang des abbildenden optischen Systems (30) in Richtung entlang der Nickachse (26) umlenkbar ist,
(d) das abbildende optische System (30) weiterhin zweite Strahlenumlenkmittel (52) enthält, die mit dem Rollrahmen (16) verdrehbar sind und durch welche der umgelenkte Strahlengang der ersten Strahlenumlenkmittel längs der Nickachse (26) aufgenommen und in die Richtung der Rollachse (18) umgelenkt wird, und
(e) der strukturfeste Detektor (86) auf der Rollachse (18) angeordnet ist.

2. Vorrichtung nach Anspruch 1,
**dadurch gekennzeichnet, dass**
(a) der objektseitige Systemteil (28) als erste Strahlenumlenkmittel erste reflektierende Mittel (36) aufweist, durch welche der Abbildungsstrahlengang des abbildenden optischen Systems (30) in Richtung entlang der Nickachse (26) umlenkbar ist,
(b) in dem Rollrahmen (16) und mit diesem drehbar auf der Nickachse (26) zweite reflektierende Mittel (54) vorgesehen sind, durch welche der Abbildungsstrahlengang des abbildenden optischen Systems (30) in eine zur Rollachse (18) parallele Richtung umlenkbar ist,
(c) in dem Rollrahmen (16) und mit diesem drehbar weiterhin dritte reflektierende Mittel (56) vorgesehen sind, durch welche der so umgelenkte Abbildungsstrahlengang zur Rollachse (18) hin in eine zu der Nickachse (26) parallele Richtung umlenkbar ist und
(d) in dem Rollrahmen (16) und mit diesen drehbar auf der Rollachse (18) vierte reflektierende Mittel (58) vorgesehen sind, durch welche der durch die dritten reflektierenden Mittel (56) umgelenkte Abbildungsstrahlengang in Richtung der Rollachse (18) auf den Detektor (86) umlenkbar ist, wobei die zweiten, dritten und vierten reflektierenden Mittel die zweiten Strahlenumlenkmittel (52) bilden.

3. Vorrichtung nach Anspruch 1,
**dadurch gekennzeichnet, dass**
(a) der objektseitige Systemteil (28) in dem Nickrahmen (24) erste reflektierende Mittel (36) aufweist, durch welche der Abbildungsstrahlengang des abbildenden optischen Systems (30) in eine Richtung parallel zur Nickachse (26) umlenkbar ist,
(b) in dem Nickrahmen (24) zweite reflektierende Mittel (54) aufweist, durch welche der Abbildungsstrahlengang des abbildenden optischen Systems (30) in eine zur Rollachse (18) parallele Richtung umlenkbar ist,
(c) in dem Nickrahmen (24) weiterhin dritte reflektierende Mittel (54) aufweist, durch welche der so umgelenkte Abbildungsstrahlengang zur Rollachse (18) hin in Richtung entlang der Nickachse (26) umlenkbar ist, wobei die ersten, zweiten und dritten reflektierenden Mittel die ersten Strahlenumlenkmittel bilden, und
(d) in dem Rollrahmen (16) und mit diesen drehbar auf der Rollachse (18) als zweite Strahlenumlenkmittel vierte reflektierende Mittel (58) vorgesehen sind, durch welche der durch die dritten reflektierenden Mittel (56) umgelenkte Abbildungsstrahlengang in Richtung der Rollachse (18) auf den Detektor (86) umlenkbar ist.

4. Vorrichtung nach Anspruch 2 oder 3,
**dadurch gekennzeichnet,**
**dass** die reflektierenden Mittel Umlenkprismen (36,65,56,58) mit einem im wesentlichen ein gleichschenklig-rechtwinkliges Dreieck bildendem Querschnitt sind, deren totalreflektierende Hypothenusenflächen (42,60,68,78) den Abbildungsstrahlengang umlenken, wobei die Kathetenflächen (62,66;72,74;82,84) jeweils senkrecht zur optischen Achse des Abbildungsstrahlenganges liegen.

5. Vorrichtung nach Anspruch 4,
**dadurch gekennzeichnet,**
**dass** wenigstens ein Teil der Kathetenflächen gekrümmte Linsenflächen bilden.

6. Vorrichtung nach Anspruch 4,
**dadurch gekennzeichnet,**
**dass** die mehreren Umlenkprismen, welche die ersten oder die zweiten Strahlenumlenkmittel bilden, von einem zusammenhängenden Körper (90) gebildet sind.

7. Vorrichtung nach einem der Ansprüche 2 bis 6,
**dadurch gekennzeichnet, dass**
(a) das abbildende optische System (30) hinter einem halbkugeligen Dom (12) angeordnet ist,
(b) die Nick- und Rollenachsen (26,18) sich im Krümmungsmittelpunkt (40) dieses Domes (12) senkrecht schneiden und
(c) die reflektierende Fläche der ersten reflektierenden Mittel (36) unter 45° zur Rollachse (18) durch diesen Schnittpunkt (40) verläuft.

8. Vorrichtung nach einem der Ansprüche 1 bis 7,
**dadurch gekennzeichnet,**
**dass** das abbildende optische System (30) wenigstens eine Zwischenabbildung (50) im Bereich der Strahlenumlenkmittel (36,52) erzeugt.

9. Vorrichtung nach Anspruch 8,
**dadurch gekennzeichnet,**
**dass** die Zwischenabbildung durch den objektseitigen Systemteil (28) zwischen den ersten und den zweiten Strahlenumlenkmitteln (36,52) erzeugt wird.

10. Flugkörper mit einer Vorrichtung gemäss einem der Ansprüche 1 bis 9.

## Claims

1. Apparatus for recording of an object scene, containing an imaging optical system (30) which can be swivelled relative to a structure (10), and containing a detector (86) which is fixed to the structure and on which the imaging optical system (30) produces an image of the object scene,
**characterized in that**
(a) the imaging optical system (30) has a system part (28) on the object side, which can be swivelled by means of a pitch frame (24) about a pitch axis (26) which is at right angles to a roll axis (18),
(b) the pitch frame (24) is mounted in a roll frame (16) such that it can be swivelled about the pitch axis (26), and the roll frame (16) is mounted in the structure (10) such that it can rotate about the roll axis (18),
(c) the system part (28) on the object side contains a first beam deflection means, by means of which the imaging beam path of the imaging optical system (30) can be deflected in the direction along the pitch axis (26),
(d) the imaging optical system (30) also contains a second beam deflection means (52), which can be rotated with the roll frame (16) and by means of which the deflected beam path of the first beam deflection means is received along the pitch axis (26) and is deflected in the direction of the roll axis (18) and
(e) the detector (86) which is fixed to the structure is arranged on the roll axis (18).

2. Apparatus according to Claim 1,
**characterized in that**
(a) the system part (28) on the object side has first reflecting means (36) as first beam deflection means, by means of which the imaging beam path of the imaging optical system (30) can be deflected in the direction along the pitch axis (26),
(b) second reflecting means (54) are provided in the roll frame (16) and such that they can rotate with it on the pitch axis (26), by means of which the imaging beam path of the imaging optical system (30) can be deflected in the direction parallel to the roll axis (18),
(c) furthermore, third reflecting means (56) are provided in the roll frame (16) and such that they can rotate with it, by means of which the imaging beam path which has been deflected in this way can be deflected towards the roll axis (18) in a direction parallel to the pitch axis (26) and
(d) fourth reflecting means (58) are provided in the roll frame (16) and such that they can rotate with it on the roll axis (18), by means of which the imaging beam path which has been deflected by the third reflecting means (56) can be deflected in the direction of the roll axis (18) onto the detector (86), with the second, third and fourth reflecting means forming the second beam deflection means (52).

3. Apparatus according to Claim 1,
**characterized in that**
(a) the system part (28) on the object side has first reflecting means (36) in the pitch frame (24), by means of which the imaging beam path of the imaging optical system (30) can be deflected in a direction parallel to the pitch axis (26),
(b) has second reflecting means (54) in the pitch frame (24), by means of which the imaging beam path of the imaging optical system (30) can be deflected in a direction parallel to the roll axis (18),
(c) furthermore has third reflecting means (54) in the pitch frame (24), by means of which the imaging beam path which has been deflected in this way can be deflected towards the roll axis (18) in the direction along the pitch axis (26), with the first, second and third reflecting means forming the first beam deflection means, and
(d) fourth reflecting means (58) are provided in the roll frame (16) and such that they can rotate with it on the roll axis (18) as second beam deflection means, by means of which the imaging beam path which has been deflected by the third reflecting means (56) can be deflected in the direction of the roll axis (18) onto the detector (86).

4. Apparatus according to Claim 2 or 3,
**characterized in that**
the reflecting means are deflection prisms (36, 65, 56, 58) with a cross section which essentially forms an isosceles right-angled triangle whose totally internally reflective hypotenuse surfaces (42, 60, 68, 78) deflect the imaging beam path, with the catheter surfaces (62, 66; 72, 74; 82, 84) each being at right angles to the optical axis of the imaging beam path.

5. Apparatus according to Claim 4,
**characterized in that**
at least a portion of the catheter surfaces form curved lens surfaces.

6. Apparatus according to Claim 4,
**characterized in that**
the plurality of deflection prisms which form the first or the second beam deflection means are formed by an integral body (90).

7. Apparatus according to one of Claims 2 to 6,
**characterized in that**
(a) the imaging optical system (30) is arranged behind a hemispherical dome (12),
(b) the pitch and roll axes (26, 18) intersect at right angles at the centre of curvature (40) of this dome (12), and
(c) the reflective surface of the first reflecting means (36) runs through this intersection (40) at 45° to the roll axis (18).

8. Apparatus according to one of Claims 1 to 7,
**characterized in that**
the imaging optical system (30) produces at least one intermediate image (50) in the area of the beam deflection means (36, 52).

9. Apparatus according to Claim 8,
**characterized in that**
the intermediate image is produced between the first and the second beam deflection means (36, 52), by the system part (28) on the object side.

10. Missile having an apparatus according to one of Claims 1 to 9.

## Revendications

1. Dispositif de détection d'une scène objet, qui contient un système optique d'imagerie (30) qui peut pivoter par rapport à une structure (10) et un détecteur (86) fixe sur la structure sur lequel une image de la scène objet est créée par le système optique d'imagerie (30),
**caractérisé en ce que**
(a) le système optique d'imagerie (30) présente une partie (28) située du cRté de l'objet qui peut pivoter avec un cadre de tangage (24) autour d'un axe de tangage (26) perpendiculaire à l'axe de roulis (18),
(b) le cadre de tangage (24) est monté à pivotement autour de l'axe de tangage (26) dans un cadre de roulis (16) qui est monté dans la structure (10) de manière à pouvoir tourner autour de l'axe de roulis (18),
(c) la partie (28) du système située du côté de l'objet contient des premiers moyens de déviation de rayon par lesquels le parcours du rayon d'imagerie du système optique d'imagerie (30) peut être dévié dans la direction de l'axe de tangage (26),
(d) le système optique d'imagerie (30) contient en outre des deuxièmes moyens (52) de déviation de rayon qui peuvent tourner avec le cadre de roulis (16) et par lesquels le parcours dévié du rayon des premiers moyens de déviation de rayon sont reçus dans la direction de l'axe de tangage (26) et sont déviés dans la direction de l'axe de roulis (18) et
(e) le détecteur (86) fixe sur la structure est disposé sur l'axe de roulis (18).

2. Dispositif selon la revendication 1, **caractérisé en ce que**
(a) la partie (28) du système située du cRté de l'objet présente comme premiers moyens de déviation du rayon des premiers moyens réfléchissants (36) par lesquels le parcours du rayon d'imagerie du système optique d'imagerie (30) peut être dévié dans la direction de l'axe de tangage (26),
(b) des deuxièmes moyens réfléchissants (24) par lesquels le parcours du rayon d'imagerie du système optique d'imagerie (30) peut être dévié dans une direction parallèle à l'axe de roulis (18) sont prévus dans le cadre de roulis (16) et peuvent tourner avec ce dernier autour de l'axe de tangage (26),
(c) des troisièmes moyens réfléchissants (56) par lesquels le parcours du rayon d'imagerie ainsi dévié peut être dévié en va-et-vient par rapport à l'axe de roulis (18) dans une direction parallèle à l'axe de tangage (26) sont en outre prévus dans le cadre de roulis (16) et peuvent tourner avec ce dernier et
(d) des quatrièmes moyens réfléchissants (58) par lesquels le parcours du rayon d'imagerie dévié par les troisièmes moyens réfléchissants (56) peut être dévié sur le détecteur (86) dans la direction de l'axe de roulis (18) sont prévus dans le cadre de roulis (16) et peuvent tourner avec ce dernier autour de l'axe de roulis (18), les deuxièmes, les troisièmes et les quatrièmes moyens réfléchissants formant les deuxièmes moyens (52) de déviation du rayon.

3. Dispositif selon la revendication 1, **caractérisé en ce que**
(a) la partie (28) du système située du côté de l'objet présente dans le cadre de roulis (24) des premiers moyens réfléchissants (36) par lesquels le parcours du rayon d'imagerie du système optique d'imagerie (30) peut être dévié dans une direction parallèle à l'axe de roulis (26),
(b) le cadre de tangage (24) présente des deuxièmes moyens réfléchissants (54) par lesquels le parcours du rayon d'imagerie du système optique d'imagerie (30) peut être dévié dans une direction parallèle à l'axe de roulis (18),
(c) le cadre de tangage (24) présente en outre des troisièmes moyens réfléchissants (54) par lesquels le parcours du rayon d'imagerie ainsi dévié peut être dévié par rapport à l'axe de roulis (18) dans la direction de l'axe de tangage (26), les premiers, les deuxièmes et les troisièmes moyens réfléchissants formant les premiers moyens de déviation du rayon, et
(d) des quatrièmes moyens réfléchissants (58) par lesquels le parcours du rayon d'imagerie dévié par les troisièmes moyens réfléchissants (56) peut être dévié sur le détecteur (86) dans la direction de l'axe de roulis (18) sont prévus dans le cadre de roulis (16) et peuvent tourner avec ce dernier autour de l'axe de roulis (18) comme deuxièmes moyens de déviation du rayon.

4. Dispositif selon la revendication 2 ou 3, **caractérisé en ce que** les moyens réfléchissants sont des prismes déviateurs (36, 65, 56, 58) dont la section transversale forme essentiellement un triangle rectangle isocèle et dont la surface d'hypoténuse à réflexion totale (42, 60, 68, 78) dévie le parcours du rayon d'imagerie, les surfaces (62, 66; 72, 74; 82, 84) qui correspondent aux côtés de l'angle droit étant toutes disposées perpendiculairement à l'axe optique du parcours du rayon d'imagerie.

5. Dispositif selon la revendication 4, **caractérisé en ce qu'**au moins une partie de la surface des cRtés de l'angle droit forme une surface de lentille courbe.

6. Dispositif selon la revendication 4, **caractérisé en ce que** les différents prismes déviateurs qui forment les premiers ou les deuxièmes moyens de déviation du rayon forment un corps (90) d'un seul tenant.

7. Dispositif selon l'une quelconque des revendications 2 à 6, **caractérisé en ce que**
(a) le système optique d'imagerie (30) est disposé derrière une calotte hémisphérique (12),
(b) les axes de tangage et de roulis (26, 18) se coupent perpendiculairement au centre de courbure (40) de cette calotte (12) et
(c) la surface réfléchissante des premiers moyens réfléchissants (36) passe par ce point de concours (40) à 45° par rapport à l'axe de roulis (18).

8. Dispositif selon l'une quelconque des revendications 1 à 7, **caractérisé en ce que** le système optique d'imagerie (30) crée au moins une image intermédiaire (50) dans la zone des moyens (36, 52) de déviation du rayon.

9. Dispositif selon la revendication 8, **caractérisé en ce que** l'image intermédiaire est créée par la partie (28) du système situé du côté de l'objet entre les premiers et les deuxièmes moyens (36, 52) de déviation du rayon.

10. Missile doté d'un dispositif selon l'une quelconque des revendications 1 à 9.
